# EUROPEAN PATENT APPLICATION

(11) **EP 4 789 952 A1**
(43) Date of publication of application: **12.08.2026**
(21) Application number: 25156953.9
(22) Date of filing: 10.02.2025
(51) Int. Cl.: B62D 25/08, B62D 29/00, B62D 25/24, B62D 25/00

(54) **BODY COMPONENT FOR A VEHICLE, VEHICLE COMPRISING A BODY COMPONENT, AND METHOD FOR FORMING A DRAINING MEANS IN A BODY COMPONENT**

(71) Applicant: Volvo Car Corporation, 405 31 Göteborg (SE)
(72) Inventor: CARLHOLMER, Stefan, 40531 Göteborg (SE); DOLINSKI, Bartosz, 40531 Göteborg (SE); KOSONEN, Kimmo, 40531 Göteborg (SE); AHLGREN, Rikard, 40531 Göteborg (SE); SVENSSON, Douglas, 40531 Göteborg (SE)
(74) Representative: Kransell & Wennborg KB

(57) **Abstract**

The disclosure relates to a body component (100) for a vehicle (120). The body component (100) comprises a draining means (230). The draining means (230) comprises at least one opening (530) formed as a plastically deformed opening in the body component (100). The draining means (230) further comprises a sealing material (311) sealing the at least one opening (530). The disclosure further relates to a vehicle (120) comprising a body component (100). Further, the disclosure relates to a method for forming a draining means (230) in a body component (100).

## Description

### TECHNICAL FIELD

The present disclosure relates to a body component for a vehicle. The body component comprises a draining means.

The disclosure further relates to a vehicle comprising a body component.

Further, the disclosure relates to a method for forming a draining means in a body component.

### BACKGROUND ART

A conventional car body may be painted for various reasons including improved durability. Specifically, it may be desirable to paint the inner cavity of such car body for instance, by means of an electrocoating. For this purpose, a conventional car body part may comprise channels through the surface for allowing the paint to flow into the inner cavity, and for draining such paint.. The channels may be sealed afterwards as a measure for corrosion prevention and noise attenuation.

### SUMMARY

The objective of the present disclosure is to improve a body component for a vehicle, wherein the body component comprises a draining means.

The problem is at least partially solved or alleviated by the subject matter of the independent claims of the present disclosure, wherein further examples are incorporated in the dependent claims.

According to a first aspect, there is provided a body component for a vehicle. The body component comprises a draining means. The draining means comprises at least one opening formed as a plastically deformed opening in the body component. The draining SE:TOP means further comprises a sealing material sealing the at least one opening.

The body component for a vehicle may comprise or be any structural component or sub-component of the vehicle.

For instance, the body component may comprise or be a skeleton of the body of the vehicle.

Alternatively or additionally, the body component may comprise an inner cavity.

Alternatively or additionally, the body component may comprise or be an assembly of a plurality of body sub-components.

Alternatively or additionally, a portion of the body component comprising the at least one opening is made from a metal sheet.

Such metal sheet may specifically allow for a plastic deformation for creating the at least one opening.

The at least one opening may be or comprise a portion being rectangular-shaped, trapezoidal-shaped, slot-shaped or elongated.

Such shape(s) may specifically allow for providing a large cross-sectional area of the at least one opening for draining, while the at least opening is sealable by a sprayable sealing material.

Alternatively or additionally, the at least one opening may comprise at least one rounded end and/or at least one smoothly curved end extending from at least one edge of the at least one opening to a surface of the body component.

Alternatively or additionally, the at least one opening may be configured to drain at least one substance and/or particle.

Alternatively or additionally, the at least one opening may be one opening end of a channel created by a lancing hole or a louver hole.

The plastic deformation process refers to a process of permeant distorting, i.e., a change of shape, a deforming material by applying a force thereto.

Such plastic deformation creates a deformed surface for the a sprayable and/or extrudable material used for a sealing material to run along, which may specifically provide an improved sealability for the at least one opening.

Such plastic deformation process may specifically prevent generating a scrap or a waste by removing, i.e., mechanically detaching, a part of the body component while forming the at least one opening.

Such plastic deformation process may alternatively or additionally simplify the manufacturing process of forming the at least one opening.

The plastic deformation process may reduce the thickness of the at least one edge of the at least one opening with respect to the thickness of the surface of the body component.

The sealing material may also be referred to as a sealant.

The sealing material is formed using sprayable and/or extrudable material.

The viscosity of such sprayable and/or extrudable material may be chosen such that the sealing material seals the at least one opening.

When such sprayable and/or extrudable material is sprayed and/or extruded onto the at least opening, the formed sealing material may comprise or be a sheet.

The sheet may comprise or be a single layer.

At least a portion of the sheet sprayed and/or extruded using one sprayable and/or extrudable material may be made of a singular compound or composition comprised in the at least one sprayable and/or extrudable material.

Such property may be an inherent feature of the sealing material formed using a sprayable and/or extrudable material.

When sprayed and/or extruded onto the at least one opening multiple time, layer over layer, the sheet may comprise or be a plurality of layers.

The body component according to the first aspect may advantageously offer a possibility to provide channels with a large total opening cross section, while simultaneously allowing the sealing material, specifically a sprayable sealing material, to be able to seal the opening.

Alternatively or additionally, the body component according to the first aspect may advantageously provide water-tightness in order to avoid corrosion and/or provide air-tightness to avoid undesired noise, specifically by the sealing material sealing the at least one opening.

Alternatively or additionally, the body component according to the first aspect may advantageously prevent generating a scrap arising from removing, i.e., physically detaching, at least a portion of the body component.

Alternatively or additionally, the body component according to the first aspect may advantageously simplify the manufacturing process.

Alternatively or additionally, the body component according to the first aspect may advantageously improve draining efficiency through the at least one opening.

Alternatively or additionally, the body component according to the first aspect may advantageously reduce the complexity of sealing the at least one opening.

According to an example, the at least one opening is configured to drain at least one substance and/or particles through a non-orthogonal draining axis with respect to a surface of the body component.

The draining axis may be a normal to the surface covering the at least one opening seen from a perspective on a tangential plane to a surface of the body component.

The surface may be a portion of the body component around the at least one opening.

The non-orthogonal draining axis may specifically provide a passage for draining the at least one substance and/or particles, while allowing the sprayable and/or extrudable sealing material to effectively form the sealing as flowing over such non-orthogonal axis.

The body component according to the example above may advantageously improve the flow rate of the at least one substance and/or particle passing therethrough.

According to an example, a length of the at least one opening is larger than a width of the at least one opening.

Such dimensionality of the at least one opening may specifically provide a large cross-sectional area of the at least one opening for draining, while the at least opening is sealable by the sprayable sealing material.

The body component according to the example above may advantageously provide a particular improvement in sealing the at least one opening using the sealing material.

Additionally or alternatively, the body component according to the first aspect may advantageously reduce the complexity of sealing the at least one opening.

According to an example, at least a portion of at least one edge of the at least one opening is raised above a surface of the body component.

Depending on the orientation of the surface of the body component, the at least a portion of the at least one edge of the at least one opening may be lowered below a surface of the body component.

The at least one opening may be a surface covering the at least one opening seen from a perspective on a tangential plane to a surface of the body component.

The at least one opening may comprise the raised edge.

The at least one opening may be one opening end of a channel created by a lancing hole or a louver hole.

The raised edge may comprise rounded ends and/or smoothly curved ends extending from at least one edge of the at least one opening to a surface of the body component.

The surface of the body component may comprise a raised portion and a raising boundary around the raised portion.

The raised boundary may comprise or be a bent portion from the raised edge to the surface of the body component.

Such raised edge is found to be specifically advantageous for providing an altered path and space for the sprayable and/or extrudable sealing to form the sealing of the at least one opening.

Additionally or alternatively, the body component according to the example above may advantageously improve draining, specifically when the surface is oriented in a way that the at least one substance and/or particles flowing on a surface is caught by the raised portion of the opening.

Alternatively or additionally, the body component according to the example above may advantageously simplify the manufacturing process of producing the at least one opening.

According to an example, the width of the at least one opening is 0.2mm to 3mm.

The width of the at least one opening may be a height of the raised edge with respect to the surface of the body component, i.e., a distance by which the raised portion of the at least one edge of the at least one opening is raised above the surface of the body component.

Such width dimension is found to be particularly advantageous for a commercial sprayable and/or extrudable material to form a sealing of the at least one opening.

According to an example, a total surface area of the at least one opening is between 50mm² and 120mm².

The at least opening may be a plurality of openings.

The total surface area may be a sum of surface area covered by the plurality of openings.

The body component according to the example above may advantageously improve draining of the at least one substance and/or particles passing through the at least one opening, specifically by enlarging the total surface area of the at least one opening.

Alternatively or additionally, the body component according to the example above may advantageously regulate the overall flow rate through the at least one opening, and avoid undesired drainage effects, specifically by restricting the total surface area of the at least one opening.

According to an example, the at least one opening comprises a plurality of channels, and wherein a distance between two adjacent channels of the plurality of channels is between 5mm to 600mm.

The body component according to the example above may advantageously improve structural rigidity.

Additionally or alternatively, the body component according to the example above may advantageously improve draining efficiency, specifically by placing the channels far apart from one another, thereby avoiding bridging of the at least one substance and/or particles passing therethrough.

Additionally or alternatively, the body component according to the example above may advantageously improve compactness of the draining means on the surface of the body component, specifically by restricting the distance between the channels.

According to an example, the body component comprises a low-carbon metal material.

The low-carbon metal material may be defined as any metal comprising carbon up to 0.30% of the total weight of the metal.

The body component according to the example above may advantageously improve the strength-to-weight ratio.

Additionally or alternatively, the body component according to the example above may advantageously improve manufacturability and welding.

Additionally or alternatively, the body component according to the example above may advantageously improve corrosion resistance.

According to an example, the body component comprises a high strength steel material.

The high strength steel may be defined as any steel with a tensile strength of above 270MPa and until 700MPa.

The body component according to the example above may advantageously improve the strength-to-weight ratio.

Additionally or alternatively, the body component according to the example above may advantageously improve structural rigidity such as tensile strength.

According to an example, the body component comprises an ultra-high strength steel material.

The Ultra-high strength steel may be defined as any steel with a tensile strength of above 700MPa.

The body component according to the example above may advantageously improve the tensile strength.

According to an example, a thickness of the body component is equal to or greater than 0.6mm and/or equal to or less than 2.5mm.

The body component according to the example above may advantageously improve structural rigidity, specifically by increasing the thickness.

Alternatively or additionally, the body component according to the example above may advantageously improves the manufacturability of the at least one opening, specifically by restricting the thickness.

According to a second aspect, there is provided a vehicle comprising the body component of any one of the examples of the first aspect.

Such vehicle may advantageously offer a possibility to provide channels with a large total opening cross section, while simultaneously allowing the sealing material, specifically a sprayable sealing material, to be able to seal the opening.

Alternatively or additionally, such vehicle may advantageously provide water-tightness in order to avoid corrosion and/or provide air-tightness to avoid undesired noise, specifically by the sealing material sealing the at least one opening.

Alternatively or additionally, such vehicle may advantageously prevent generating a scrap arising from removing, i.e., physically detaching, at least a portion of the body component.

Alternatively or additionally, such vehicle may advantageously simplify the manufacturing process.

Alternatively or additionally, such vehicle may advantageously improve draining efficiency through the at least one opening.

Alternatively or additionally, such vehicle may advantageously reduce the complexity of sealing the at least one opening.

According to a third aspect, there is provided a method for forming a draining means in a body component for a vehicle. The method comprises forming a plastically deformed opening as at least one opening in the body component. The method further comprises sealing the at least one opening with a sealing material.

Such method may advantageously offer a possibility to provide channels with a large total opening cross section, while simultaneously allowing the sealing material, specifically a sprayable sealing material, to be able to seal the opening.

Alternatively or additionally, such method may advantageously provide water-tightness in order to avoid corrosion and/or provide air-tightness to avoid undesired noise, specifically by the sealing material sealing the at least one opening.

Alternatively or additionally, such method may advantageously prevent generating a scrap arising from removing, i.e., physically detaching, at least a portion of the body component.

Alternatively or additionally, such method may advantageously simplify the manufacturing process.

Alternatively or additionally, such method may advantageously improve draining efficiency through the at least one opening.

Alternatively or additionally, such method may advantageously reduce the complexity of sealing the at least one opening.

According to an example, forming a plastically deformed opening as at least one opening in the body component comprises cutting at least one slit in a surface of the body component. Further, forming a plastically deformed opening as at least one opening in the body component further comprises pressing on the surface extending from the at least one slit for raising at least a portion of an edge of the at least one slit above the surface of the body component.

The cut portion of the at least one slit remains mechanically connected to the body component.

The method according to the example above may advantageously ease the difficulty of forming the at least one opening, specifically by cutting at least one slit in the surface of the body component.

Additionally or alternatively, the method according to the example above may advantageously improve manufacturing efficiency of forming the at least one opening, specifically by pressing onto the surface.

According to an example, sealing the at least one opening with the sealing material is performed after at least partially draining at least one substance and/or particles through the at least one opening.

The method according to the example above may advantageously ease the difficulty of forming the at least one opening, specifically by cutting at least one slit in the surface of the body component.

According to an example, the sealing material is sprayable and/or extrudable.

According to an example, sealing the at least one opening with a sealing material comprises spraying and/or extruding the sealing material onto the at least one opening.

The method according to the example above may advantageously improve manufacturing efficiency sealing the at least one opening, specifically by spraying and/or extruding the sealing material.

Additionally or alternatively, the method according to the example above advantageously consistency of the coating.

The method may be at least partly performed by a robotic arm, to which a spraying and/or extruding means for spraying and/or extruding the sealing material is attached.

The method according to the example above may advantageously simplify the manufacturing process.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: illustrates a perspective view of a body component for a vehicle.
- Figure 2: illustrates a zoomed in view of a frontal side beam of the body component as shown in Figure 1, comprising channels according to an example of the present disclosure.
- Figure 3: illustrates a zoomed in view of a frontal side beam of the body component as shown in Figure 1 with the channels shown in Figure 2 being sealed with a sealing material according to an example of the present disclosure.
- Figure 4: illustrates a cross-sectional view of a process for forming a plastically deformed opening as shown in Figure 2.
- Figure 5: illustrates a front view of a lancing hole with a cross-sectional line running through the lancing hole according to an example of the present disclosure.
- Figure 6: illustrates a top view of a lancing hole of Figure 5 with a cross-sectional line running through the lancing hole.
- Figure 7: illustrates a cross-sectional view of the lancing hole of Figure 5.
- Figure 8: illustrates a method according to an example of the present disclosure.

### DETAILED DESCRIPTION

The Figures are merely schematic representations and serve only to illustrate examples of the disclosure. Identical or equivalent elements are in principle provided with the same reference signs.

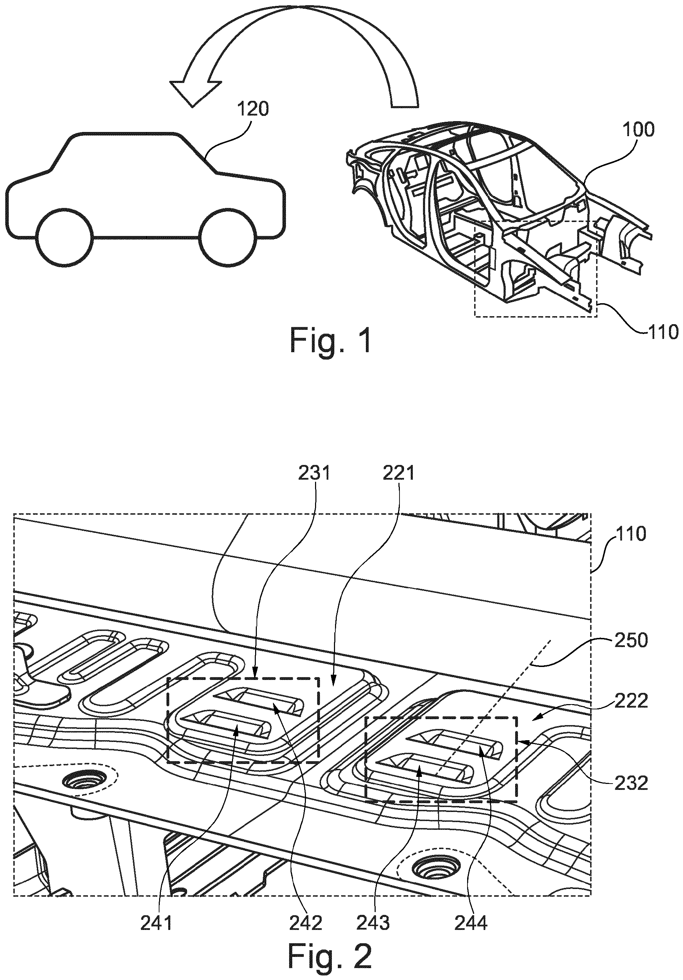

Figure 1 illustrates an perspective view of a body component 100 for a vehicle 120.

The body component 100 forms a main body frame of the vehicle 120 when assembled.

The body component 100 comprises a frontal side beam 110 arranged above a wheel house.

The front side beam 110 is further elaborated in reference to Figure 2 in the following.

The frontal side beam 110 comprises two separate cavities, where each of the cavities is covered by first and second metal sheets 221 and 222.

The first metal sheet 221 comprises a first draining means 231, and the second metal sheet 222 comprises a second draining means 232.

The first draining means 231 comprises neighboring first and second channels 241 and 242 through the first metal sheet 221, and the second draining means 232 comprises two neighboring third and fourth channels 243 and 244 through the second metal sheet 222.

The first to fourth channels 241, 242, 243, and 244 are formed by plastically deforming the respective metal sheet 221 and 222 towards the respective cavities, such that a passage is formed between inside and outside the cavity.

The first to fourth channels 241, 242, 243, and 244 comprises pressed edges, or raised edges depending on the orientation, which is lowered with respect to the surface of the respective first and second metal sheets 221 and 222.

For electrocoating, the paint is passed through the channels 241, 242, 243, and 244 and reach inside the first and second cavities.

After the coating, the remaining paint inside the cavity is drained through the first to fourth channels 241, 242, 243, and 244.

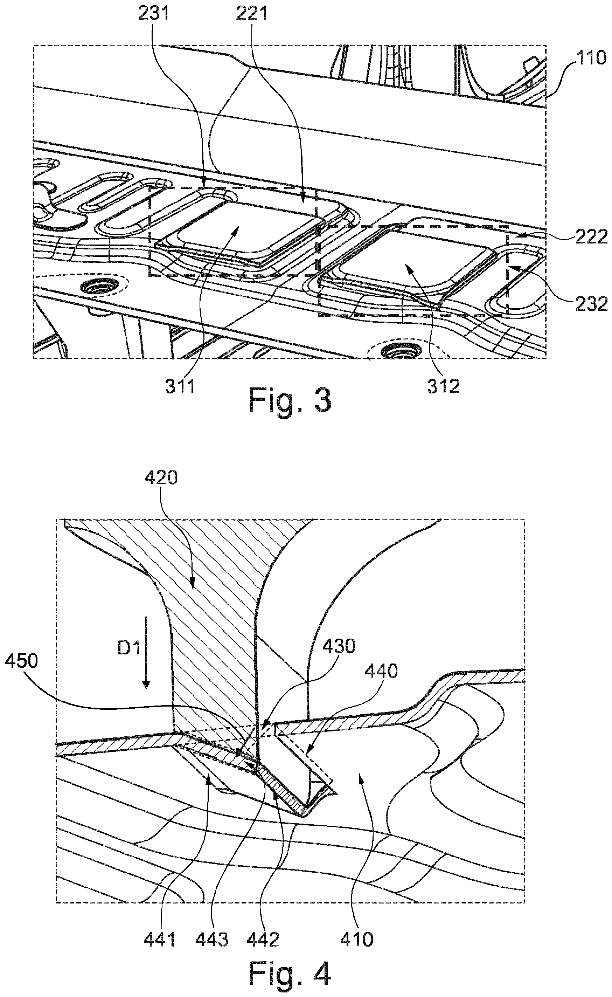

Then, the first to fourth channels 241, 242, 243, and 244 are sealed using the sealing material as shown in Figure 3.

Figure 3 illustrates a zoomed-in view of the frontal side beam 110 as shown in Figure 1 with the channels 241, 242, 243, and 244 shown in Figure 2 being sealed using sealants 311 and 312.

The first and second channels 241 and 242 are sealed using a first sealant 311, and the third and fourth channels 243 and 244 are sealed using a second sealant 312.

The first and second sealants 311 and 312 are formed by spraying a sprayable sealing material onto the respective first and second metal sheets 221 and 222.

The sprayed sprayable sealing material is guided into the respective channels 241, 242, 243, and 244.

However, as the channels 241, 242, 243, and 244 are plastically deformed without removing any portion the first and second metal sheets 221 and 222, thereby forming a continuous and smooth transition from the surface of the first metal sheet 221 to the first and second channels 241 and 242, and similarly from the surface of the second metal sheet 222 to the third and fourth cannels, the sealing material solidifies before running off from the openings with the pressed edges.

Accordingly, the sealants 311 and 312 seal the openings of the draining means 231 and 232.

A commercial sealant is observed to effectively seal the openings shut when the height of the openings, i.e., a distance between the surface of a metal sheet and a pressed edge or raised edge is from 0.2mm to 3mm.

The resulting sealants 311 and 312 are single layered, or comprise a plurality of layers when sprayed a layer over a layer over a plurality of times, and the composition of the sealants 311 and 312 is singular throughout the sealants 311 and 312.

Forming a plastically deformed opening on a metal sheet according to an embodiment of the present disclosure is further elaborated in reference to Figure 4.

Figure 4 illustrates a cross-sectional view along the dotted line 250 running through the middle of the fourth channel 244 in the process of forming the opening.

Firstly, a slit is cut into a sheet comprising a surface 410 with a deforming portion in the original state 430.

Secondly, a controlled force is applied to the deforming portion of the sheet using a press 420, i.e., in the direction D1 as shown in Figure 4.

The deforming portion extends from an edge of the slit towards an opposite direction from a cut created by the slit.

The applied force exceeds the sheet's yield strength, but remains below the fracture threshold, so as to deform a deforming portion of the sheet while avoiding breaking around the deforming edges.

Thirdly, the controlled punch force plastically deforms the deforming portion of the sheet, thereby creating a plastically deformed opening 440.

The deformed portion has been displaced from the original position 430 to the raised position 443, as indicated with an arrow 450 in Figure 4.

The deformed portion is raised, with respect to the surrounding surface 410, from a raising boundary 441 around the raised portion.

The plastically deformed opening 440 comprises a raised edge 442 being raised from the surface 410, or lowered below the surface 410 depending on the orientation.

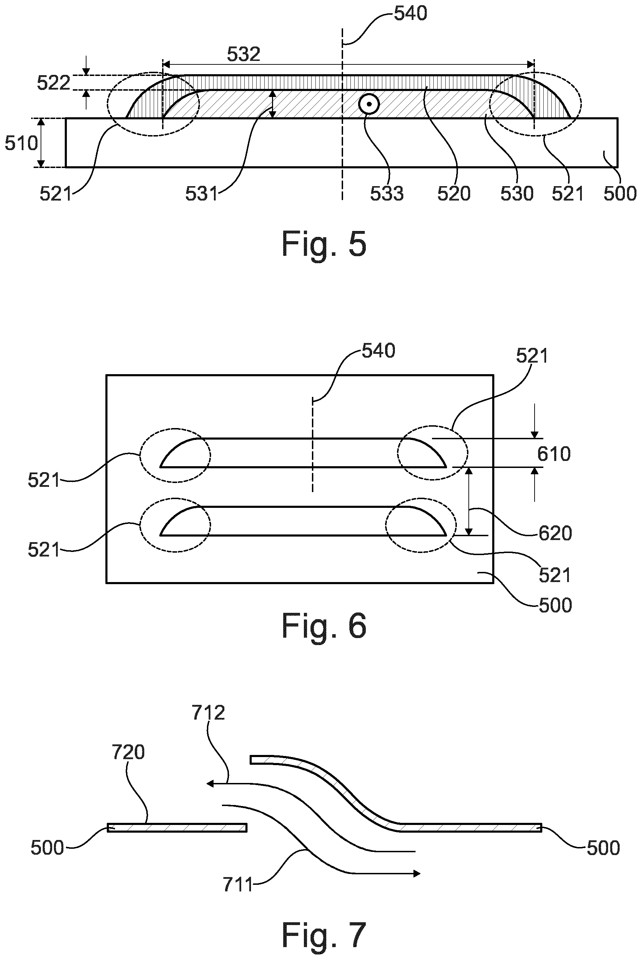

An exemplary lancing hole formed according to an embodiment is further elaborated in reference to Figures 5, 6, and 7.

Figures 5, 6, and 6 respectively illustrate a front view, a top view, and a cross-sectional view of a lancing hole, respectively.

In reference to Figure 5 illustrating a front view of the lancing hole, the lancing hole comprises a raised edge with having a thickness narrower than the thickness of the metal sheet, caused by the force applied thereto while plastically deforming the metal sheet.

The raised edge comprises two ends that are smoothly curved and connected to the metal sheet, caused by the plastic deformation process.

The raised edge creates a slot opening with a defined slot height, or herein also referred to as a width, and a slot length.

A two-dimensional area of the slot opening seen from the front perspective into the slot defines the surface of the slot opening.

A dotted line runs through the center of the lancing hole seen from the front indicating a cross-sectional line.

The draining axis is a vector coming out of the page as shown in Figure 5.

Specifically, the draining axis is a normal to a surface covering the opening seen from the front view as shown in Figure 5, i.e., on a point on a tangential plane to the surface of the metal sheet.

In reference to Figure 6, the dimension of the lancing hole is further defined by a depth of the slot, indicating a distance from the slot opening to the inner surface of the lancing hole following a tangent line to a surface of the metal sheet around the lancing hole.

When there is a plurality of lancing holes, a distance between two lancing holes is defined by a slot-to-slot distance, indicating a distance from one slot opening to another slot opening following a tangent line to a surface of the metal sheet around the lancing holes.

Figure 7 illustrates a cross-sectional view along the dotted line 540 of Figure 5.

The lancing hole allows a flow of the paint in a first and/or second direction.

Depending on the orientation of the lancing hole, the first direction 711 may be the draining direction or the second direction 712 may be the draining direction.

The flow in the first direction 711 allows the paint to arrive at the surface 720, with respect to which the opening is considered to be formed by raising the edge.

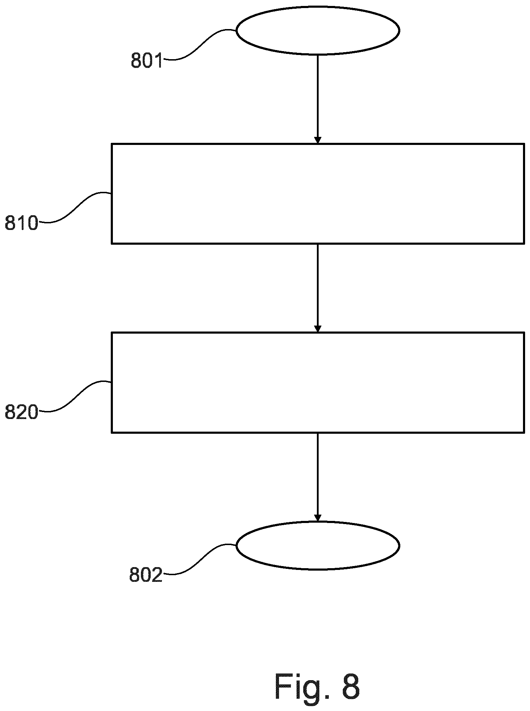

Figure 8 illustrates a method for forming a draining means in a body component 100 for a vehicle

The method starts at 801.

At 810, a plastically deformed opening is formed as at least one opening in the body component 100.

Forming a plastically deformed opening as at least one opening in the body component 100 comprises cutting at least one slit in a surface of the body component 100.

Forming a plastically deformed opening as at least one opening in the body component 100 further comprises pressing on the surface extending from the at least one slit for raising at least a portion of an edge of the at least one slit above the surface of the body component 100.

Such plastic deformation process is elaborated above in reference to Figure 4.

At 820, the at least one opening is sealed with a sealing material.

Sealing the at least one opening with the sealing material is performed after at least partially draining at least one substance and/or particles through the at least one opening.

Additionally or alternatively, the sealing material is sprayable and/or extrudable.

Additionally or alternatively, sealing the at least one opening with a sealing material comprises spraying and/or extruding the sealing material onto the at least one opening.

The method ends at 802.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. Any reference signs in the claims should not be construed as limiting the scope of the claims.

### LIST OF REFERENCE SIGNS

- 100: Body component
- 110: Frontal side beam
- 120: Vehicle
- 221: First metal sheet
- 222: Second metal sheet
- 231: First draining means
- 232: Second draining means
- 241: First channel
- 242: Second channel
- 243: Third channel
- 244: Fourth channel
- 250: Cross-section line
- 311: First sealant
- 312: Second sealant
- 410: Surface
- 420: Press
- 430: Original position
- 440: Opening
- 441: Raising boundary
- 442: Raised edge
- 443: Raised position
- 450: Displacement direction
- D1: Pressing direction
- 500: Metal sheet
- 510: Thickness of the metal sheet
- 520: Raised edge
- 521: Rounded ends
- 522: Thickness of the raised edge
- 530: Opening
- 531: Width of the opening
- 532: length of the opening
- 533: Draining axis
- 540: Cross-sectional line
- 610: Depth of the lancing hole
- 620: Slot-to-slot distance
- 711: First direction
- 712: Second direction
- 720: Surface of the metal sheet
- 801: Start
- 802: End
- 810: First step
- 820: Second step

## Claims

1. A body component (100) for a vehicle, the body component (100) comprising a draining means (230) comprising:
at least one opening (530) formed as a plastically deformed opening in the body component (100); and
a sealing material (311) sealing the at least one opening (530).

2. The body component (100) of claim 1, wherein the at least one opening (530) is configured to drain at least one substance and/or particles through a non-orthogonal draining axis (533) with respect to a surface (720) of the body component (100).

3. The body component (100) of claim 1 or 2, wherein a length (532) of the at least one opening (530) is larger than a width (531) of the at least one opening (530).

4. The body component (100) of any one of the preceding claims, wherein at least a portion of at least one edge (520) of the at least one opening (530) is raised above a surface (720) of the body component (100).

5. The body component (100) of any one of the preceding claims, the width (531) of the at least one opening (530) is between 0.2mm and 3mm.

6. The body component (100) of any one of the preceding claims, wherein a total surface area of the at least one opening (530) is between 50mm² and 120mm².

7. The body component (100) of any one of the preceding claims, wherein the at least one opening (530) comprises a plurality of channels, and wherein a distance (620) between two adjacent channels of the plurality of channels is between 5mm to 600mm.

8. The body component (100) of any one of the preceding claims, wherein the body component (100) comprises a low-carbon metal material, a high strength steel material, and/or an ultra-high strength steel material.

9. The body component (100) of any one of the preceding claims, wherein a thickness (510) of the body component (100) is equal to or greater than 0.6mm and/or equal to or less than 2.5mm.

10. A vehicle (120) comprising the body component (100) of any one of the preceding claims.

11. A method for forming a draining means (230) in a body component (100) for a vehicle (120), the method comprising:
forming a plastically deformed opening as at least one opening (530) in the body component (100); and
sealing the at least one opening (530) with a sealing material (311).

12. The method of claim 11, wherein forming a plastically deformed opening as at least one opening (530) in the body component (100) comprises:
cutting at least one slit in a surface (720) of the body component (100); and
pressing on the surface (720) extending from the at least one slit for raising at least a portion of an edge of the at least one slit above the surface (720) of the body component (100).

13. The method of claim 11 or 12, wherein sealing the at least one opening (530) with the sealing material (311) is performed after at least partially draining at least one substance and/or particles through the at least one opening (530).

14. The method of any one of claims 11 to 13, wherein the sealing material (311) is sprayable and/or extrudable.

15. The method of any one of claims 11 to 14, wherein sealing the at least one opening (530) with a sealing material (311) comprises spraying and/or extruding the sealing material (311) onto the at least one opening (530).
